# EUROPEAN PATENT SPECIFICATION

(11) **EP 2 601 870 B1**
(45) Date of publication and mention of the grant of the patent: **19.02.2014**
(21) Application number: 11192807.3
(22) Date of filing: 09.12.2011
(51) Int. Cl.: A47J 37/04

(54) **Heating element for a cooking apparatus**
Heizelement für eine Kochvorrichtung
Élément de chauffage pour appareil de cuisson

(43) Date of publication of application: 12.06.2013
(73) Proprietor: John Bean Technologies AB, 251 09 Helsingborg (SE)
(72) Inventor: Blixt, Per, 252 51 Helsingborg (SE); Johansson, Carl-Alvar, 286 33 Örkelljunga (SE)
(74) Representative: Andersson, Mikael Per Robert

(56) References cited:
- US-A- 3 520 249
- US-A- 3 646 880
- US-A- 5 044 264

## Description

### Field of technology

The present invention relates to a heating element for a cooking apparatus.

### Technical background

Within the food production industry, some food products are pre-cooked. A commonly used cooking apparatus type for this purpose is a belt cooking apparatus, also known as a belt grill. Food products, such as hamburgers, chicken filets, fish filets, pancakes or other food products, can be cooked in this type of apparatus. Cooking is effected while the food products is transported on one or more moving belts while heat is conducted through the moving belt(s) by heating elements behind the belt(s). Heating platens are often used as heating elements.

US 3 646 880 discloses a typical belt cooking apparatus. The apparatus has two belts between which the food products are transported and cooked by heat from heating platens behind the belts. The heating platens comprise a generally rectangular-shaped metal panel, in which electrical resistance heating conductors are mounted. According to US 3 646 880 the heating platens can be made of aluminum or stainless steel.

Heating platens in a cooking apparatus, such as a belt cooking apparatus, are exposed to a lot of wearing. For example, during the cooking process the heating platens, especially the ones on the lower side of the transporting belt(s), are exposed to cooking liquids such as grease containing salts. Further, in order to keep the food production hygienic, the apparatus and its heating platens are exposed to cleaning with often strong cleaning agents and cleaning tools such as scrapers and brushes. The surfaces of the heating platens are easily damaged due to all these wear factors, yielding uneven surfaces with cavities and scores, especially if the heating platens are made of aluminum. Aluminum is a material typically used for producing heating platens for belt cooking apparatuses. The uneven surfaces result in an uneven and non-optimal cooking of the food products. Thus, in order to cook the food products in a satisfactory way, the heating platens must be replaced frequently. This is of course costly in both money and time.

Attempts have been made in order to make the heating platens and other type of heating elements more wearable. For example, surface coatings have been applied in order to increase the wear resistance. Thus, the surface becomes more durable against chemical and physical attacks. However, surface coatings do not increase the life time by much since the often thin coatings eventually are worn off. Another problem with surface coatings is that they do not satisfactorily cover pores in some commonly used heating element materials, such as aluminum.

Attempts have been made to manufacture heating elements with more robust materials than the typically used aluminum. For example stainless steel has been used, see e.g. US 3 646 880. However, if stainless steel is used for the heating element it is difficult and costly to mount heating conductors inside the heating element. Molding heating conductors inside a heating element made of stainless steel is impossible due to that if tried the heating conductors will melt due to the high temperature of the stainless steel casting liquid. Accordingly, heating conductors are usually mounted inside a heating element made of stainless steel by machining grooves in a stainless steel metal panel and thereafter inserting electrical resistance heating conductors into the grooves.

Accordingly, there is a need for an improved heating element for a cooking apparatus such as a belt cooking apparatus.

### Summary of the invention

An object of the present invention is to provide a heating element for a cooking apparatus such as a belt cooking apparatus; the heating element exhibiting improved wear resistance when exposed to e.g. grease (containing salt) during the cooking of food products in the cooking apparatus.

Another object of the present invention is to provide a heating element for a cooking apparatus; which heating element can easily be cleaned with cleaning agents and cleaning tools without damaging the surface of the heating element.

Yet another object of the present invention is to provide a heating element for a cooking apparatus; which heating element is easy and cheap to produce.

According to one aspect of the present invention, at least one of the above objects is achieved by a heating element for a cooking apparatus with a heating body enclosed in a housing made of corrosion resistant steel. The heating body provides heat by having a heat transfer loop encased within the heating body. The heating body is disposed within the housing for allowing heat transfer from the heating body to the housing. The housing comprises a cooking side and side surfaces extending from the cooking side.

By the present invention, the heating element is divided into an outer part (the housing) and an inner part (the heating body). The parts are preferably made of two different materials. This feature enables the combination of corrosion resistant steel as a robust, wear resistant material for the outside and a material optimal for providing heat for the inside. Further, the inside material may be chosen such that a heat loop can be embedded inside the heating body during forming of the heating body.

In comparison to a heating plate made of stainless steel, the heating element according to the present invention may easier be manufactured, since the complicated step of mounting heat elements within the stainless steel is avoided.

Advantageously, the heating element is arranged against the cooking side of the housing for an optimal heat transfer from the heating body to the housing.

Preferably, the corrosion resistant steel, of which the housing is made of, is a stainless steel. It is preferred that the stainless steel is an austenitic-ferritic stainless steel, also referred to as a duplex stainless steel.

Preferably, at least the cooking side of the housing is made of a corrosion resistant steel being a heat resistant steel. Such a material is advantageous since it can bear high temperatures without being damaged, such as becoming warped, compared to other types of steel.

The heating body is preferably manufactured in one of the following materials: aluminum, zinc, tin, lead, heat conducting granulate or thermal grease. These materials are advantageous since they have a good heat conductibility.

The heat transfer loop may comprise an electrical resistance heater for providing heat. The heat transfer loop may also comprise a channel adopted to carry a hot fluid such as hot oil, hot water, or steam. Other commonly alternatives for heat transfer loops may also be used and are known to one of ordinary skill in the art.

The heating body may be formed by casting. Preferably, the heating body is casted inside the housing, i.e. the housing forms the casting mold. Thereby, the heating body may be easily formed in one piece to fit the specific housing. Advantageously, the heat transfer loop is embedded inside the heating body while casting the heating body inside the housing. Further, when casting the heating body inside the housing aluminum, zinc, tin, lead or an alloy mainly comprising any or some of these metals is preferably used for the heating body. This since these materials has a lower fusing point than the material used for the heat transfer loop. Thus, it is feasible to cast a heat transfer loop in the heating body without damaging the heat transfer loop due to a high temperature of the casting liquid.

Alternatively, the heating body may be formed separately and thereafter mounted in the housing. The heating body may be bolted inside the housing. Preferably, the heating body is resiliently bolted inside the housing.

Besides the cooking side and side walls, the housing may further comprise a cover side. The cover side is in such an embodiment arranged adjacent to the side surfaces and opposite the cooking side such that the housing fully encloses the heating body. Thereby, the heating body is fully protected from any products or chemicals and also from any physically influenced damages from e.g. cleaning tools.

The cooking apparatus may be a belt cooking apparatus. During operation of the belt cooking apparatus, the cooking side of the housing is in such an embodiment exposed to the belt of the belt cooking apparatus. By this feature, the heat from the heating element can be provided to the concerned food products through the belt.

The heating element may have different forms, such as plate shaped, curved, tube formed, or hemisphere formed.

In another aspect of the present invention, the above mentioned and other objects are achieved through a belt cooking apparatus comprising a heating element according to the above.

In yet another aspect of the present invention, the above mentioned and other objects are achieved through a method for producing a heating element for a cooking apparatus. The method comprises the steps of:
- providing a housing made of corrosion resistant steel, the housing having a cooking side and side surfaces extending from the cooking side, and
- forming a heating body, having a heat transfer loop embedded therein, inside the housing.

The method could comprise a further step of arranging a cover side adjacent to the side surfaces and opposite the cooking side such that the housing fully encloses the heating body.

Preferably, the forming of the heating body comprises casting the heating body, i.e. the heating body is formed by casting the heating body inside the housing.

Preferably, the corrosion resistant steel in the housing is a stainless steel. It is preferred that the stainless steel is an austenitic-ferritic stainless steel, also referred to as a duplex stainless steel.

Preferably, at least the cooking side is made of a corrosion resistant steel being a heat resistant steel.

The heating body is preferably manufactured in one of the following materials: aluminum, zinc, tin, lead, heat conducting granulate or thermal grease.

While forming, preferably casting, the heating body inside the housing, the heat transfer loop is preferably embedded inside the heating body. Thereby, the heat transfer loop does not need to be separately arranged in the heating body.

The heat transfer loop could comprise an electrical resistance heater. The heat transfer loop could also comprise a channel adopted to carry a hot fluid such as hot oil, hot water, or steam. Other alternatives known to one of ordinary skill in the art are also possible within the scope of the invention.

Achieving at least one of the above mentioned objects will result in a heating element with improved life-time and durability. Both money and time can be saved since e.g. the heating elements do not need to be exchanged as often as for known heating elements. Furthermore, the manufacturing becomes easier in comparison to heating elements made of stainless steel since the time consuming step of mounting a heat transfer loop in the heating element is avoided.

### Brief description of the drawings

The invention will by way of example be described in more detail with reference to the appended schematic drawings, which show presently preferred embodiments of the invention.
Figure 1 is a view from above of a heating element with a housing and a heating body.
Figure 2 is a view from above of a heating element having a plurality of heating elements.
Figure 3 is a exploded view of a heating element.
Figure 4 is a side view of a heating element having a housing which fully encloses the heating body.
Figure 5 is a side view of a belt cooking apparatus having heating elements.
Figure 6 is a side view of a heating element arranged adjacent a belt.
Figures 7a - 7c illustrate different forms of a heating element.
Figure 8 is a schematic view of a method for producing a heating element for a cooking apparatus.

### Detailed description of preferred embodiments

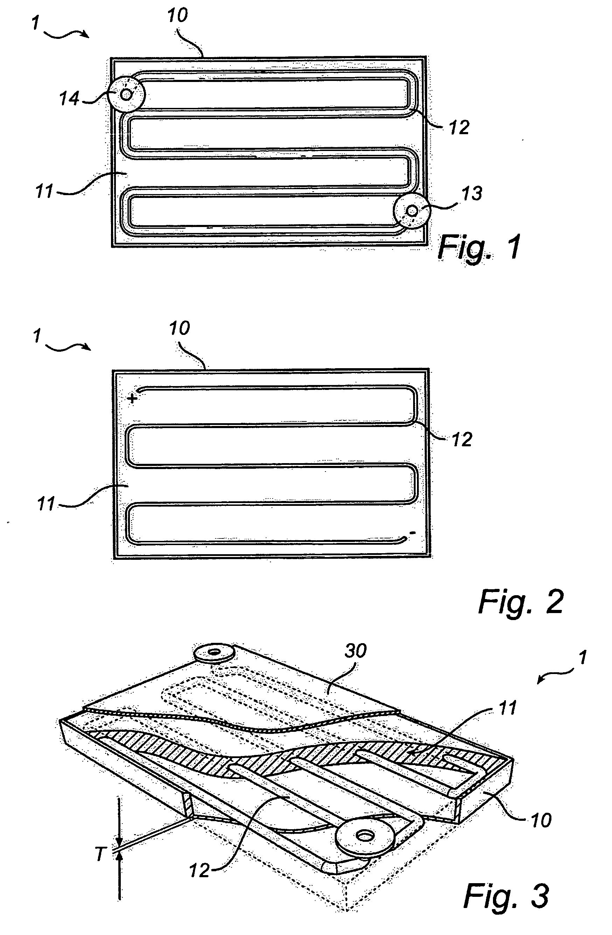

A heating element 1 for a cooking apparatus is illustrated from above in figure 1 and in figure 2. The heating element 1 is composed of a housing 10 and a heating body 11. The housing 10 is made up by a cooking side (not shown) and side surfaces which extends from the cooking side forming a casing.

In one embodiment, the heating element 1 is a heating platen.

The housing 10 is made of corrosion resistant steel. In comparison to aluminum, a typically used heating element material, corrosion resistant steel has improved resistance against cooking fluids such as grease containing salt. For other typically used materials such fluids easily damage exposed parts of the heating element 1 which results in rougher surfaces. Thereby, the heat transfer, and consequently the cooking of the food products, becomes more uneven and more difficult to control.

Moreover, corrosion resistant steel has improved resistance against chemicals such as strong cleaning agents used to clean the heating element. Thus, the corrosion resistant steel in the housing 10 protects the heating body 11 from being affected by both cooking fluids and the cleaning process. A further advantage gained by using corrosion resistant steel is that it exhibits an improved resistance against applied physical force from brushes, scrapes and other cleaning tools, as compared to aluminum, a typically used material for producing heating element.

According to one embodiment of the present invention, the housing 10 is made of stainless steel. Stainless steel is a preferred material for the housing 10. It is preferred that the stainless steel is an austenitic-ferritic stainless steel, also referred to as a duplex stainless steel. This type of steel combines many of the beneficial properties of ferritic and austenitic steels. Due to the high content of chromium and nickel, and often molybdenum, these stainless steels offer a god temperature stability as well as good resistance to corrosion.

According to one embodiment of the present invention, at least the cover side of the housing 10 is made of a heat resistant steel. Heat resistant steel is a type of corrosion resistant steel. A heat resistant steel can bear high temperatures without becoming damaged, such as being warped. Thereby, the heating element, and in particular the cover side, can be exposed to high cooking temperatures and still maintain an even surface of the cooking side.

By the present invention, the heating element 1 is divided into an outer part (the housing 10) and an inner part (the heating body 11). The parts are preferably made of two different materials. This feature enables choosing a robust, wear resistant material for the outside and a material optimal for providing heat for the inside.

At least the cooking side of the outside of the housing 10 has a smooth surface. The smooth surface enables an even heat transfer to the food products while being cooked.

In one embodiment, the cooking side is adapted to be arranged adjacent to a belt in a belt cooking apparatus, such that the outside of the housing 10 is exposed to the belt. Through the outside being exposed to the belt, heat is transferred through the belt and to the food products being transported on the other side of the belt, thus cooking the food products. An even outer surface of the outside of the housing being exposed to the belt is preferred for an even transmission of heat through the belt. Otherwise, the food products will be cooked unevenly with potential risk of under or over cooking. Further, it is preferred that the surface stays the same in order to have control over the heat transfer.

In order to provide heat to the heating element 1, a heat transfer loop 12 is arranged in the heating body 11.

In the embodiment illustrated by figure 1, the heat transfer loop 12 is a channel adopted to carry a hot fluid. The hot fluid could, but is not restricted to, be hot oil, hot water or steam. For transporting the fluid through the channel, the heat transfer loop 12 is provided with an inlet 13 and an outlet 14.

In one embodiment illustrated by figure 2, the heat transfer loop 12 is an electrical resistance heater.

Other alternative heat transfer loops 12 are also possible as understood by one of ordinary skill in the art.

The heating body 11 could comprise a plurality of heat transfer loops 12. The heat transfer loops 12 do not need to be of the same type.

From the heat transfer loop 12, heat is provided to the heating body 11 and further to the housing 10.

Hence, the heat is generated inside the heating body 11. In order to transfer the heat from the inside to the outside of the heating body 11, the material of the heating body 11 should have good heat conductibility. Materials which are preferred for the heating body 11 are aluminum, zinc, tin, lead, heat conducting granulate and thermal grease or a mixture comprising one or more of these material. Since the heating body 11 is protected by the housing 10, any material suitable for providing and conducting heat may be chosen for the heating body 11.

The heating body 11 is disposed inside the housing 10. Preferably, the heating body 11 is arranged against the cooking side of the housing 10. This feature allows for an optimal heat transfer from the heating body 11 to the housing 10. Alternatively, the heating body 11 could be arranged with heat conducting means between the heating body 11 and the cooking side of the housing 10.

In a preferred embodiment the heating body 11 is formed directly inside the housing 10 by casting. This feature simplifies the manufacturing by eliminating the need of external molds and molding processes. Casting liquid for the heating body 11 is poured into the housing 10 and is solidified.

Preferably, the housing 10 is pre-heated before the casting liquid is poured into the housing 10. Advantageously, the housing 10 is pre-heated to a temperature near the temperature of the casting liquid.

Preferably, the heat transfer loop 12 is embedded in the casting liquid before it solidifies. This may e.g. be done by arranging the heat transfer loop 12 inside the housing 10 before the casting liquid for the heating body 11 is poured into the housing 10. Thus, the heat transfer loop 12 becomes embedded inside the heating body 11 while forming the heating body 11 inside the housing 10.

It should be noted that the temperature of casting liquid of aluminum, zinc, tin or lead, preferred materials used for producing the heating body 11 when casting the heating body 11 inside the housing 10, is lower than the melting temperature for the materials used for the heat transfer loop 12. The heat transfer loop 12 preferably comprises of a corrosion resistant steel.

As mentioned, according to an alternative embodiment, the heating body 11 could instead be prefabricated and thereafter attached inside the housing 10. A prefabricated heating body 11 is casted or molded with the heat transfer loop 12 inside the heating body 11. Thereafter, the heating body 11 is disposed inside the housing 10. Preferably, the heating body 11 is bolted inside the housing 10.

The heating element 1 could comprise a plurality of heating bodies. The heating bodies may each comprise heat transfer loops 12 having an inlet 13 and an outlet 14. The heating bodies do not need to have the same type of heat transfer loop 12. Further, the heating bodies do not need to provide the same amount of heat. The heating bodies could be controlled individually. This feature provides for a controlled way to consciously cook food products unevenly.

A heating element 1 comprising a housing 10 and a heating body 11 according to above is illustrated in figure 3. Alternatives and features disclosed above also apply to this embodiment.

The heating element 1 further comprises a cover side 30. The cover side 30 is arranged adjacent to the side surfaces and opposite the cooking side. Thus, the housing 10 comprising the cover side 30 closes the housing 10 such that the housing 10 fully encloses the heating body 11. This feature ensures that the heating body 11 is completely protected from influences from e.g. cooking liquids, cleaning agents or tools.

Since the casting liquid is typically of a high temperature, the cooking side and side walls of the housing 10 may be exposed to high temperature shifts possibly resulting in that one or more surfaces of the housing 10 warps. Therefore, in embodiments where the heating body 11 is casted in the housing 10, it is preferred that a thickness T of at least the cooking side of the housing 10 is in the range of 3 - 12 millimeters. Preferably, the thickness T is in the range of 5 - 7 millimeters.

However, the cover side 30 is arranged and becomes a part of the housing 10 after the heating body 11 has been arranged inside the housing. Thus, a cover side 30 of any thickness is sufficient even in embodiments where the heating body 11 is casted inside the housing 10.

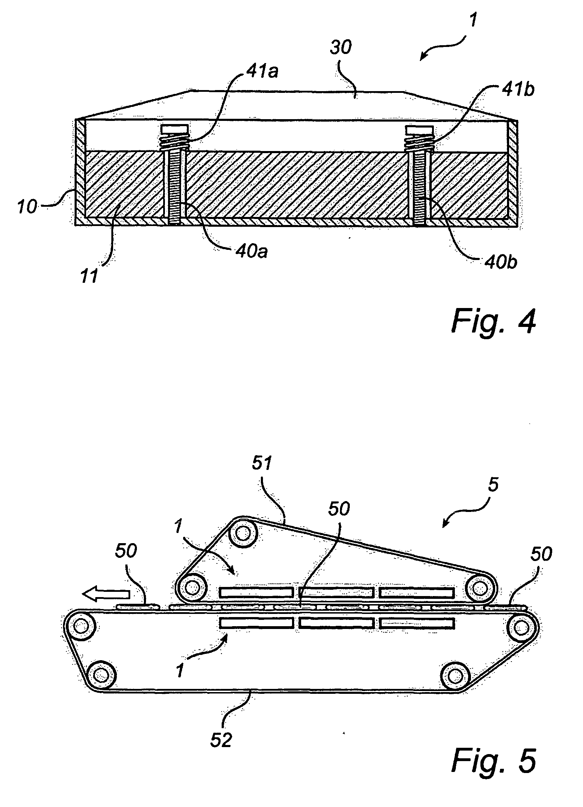

A heating element 1 comprising a housing 10, heating body 11 with heat transfer loop 12 according to above is illustrated in figure 4. The heating element 1 further comprises a cover side 30.

The cover side 30 is shaped such that fluids can flow off the cover side 30. In figure 4, this is achieved by having inclining parts of the cover side 30. Other shapes achieving the same effect is of course also possible.

This feature is advantageous since the risk of damaging the heating element 1 due to remaining fluids on the cover side 30 is decreased. This problem could occur when the heating element 1 is cleaned with fluids containing strong cleaning agents. Such cleaning agents could damage the outside of the heating element 1 if it remains in contact with the heating element 1 for too long.

In this embodiment, the heating body 11 is disposed inside the housing 10 by being resiliently attached by being resiliently bolted. This feature is achieved by bolting the heating body 11 by means of bolts in a direction substantially perpendicular to the cooking side plane. In this embodiment, the bolts are screws 40a, 40b.

One or more springs 41 a, 41 b are arranged between the head of each screw 40a, 40b and the heating element 1, and around the body of each screw 40a, 40b. The springs 41 a, 41 b allow resilient movement of the heating body 11 in the direction substantially perpendicular to the plane of the cooking side. Such a combination of screws and springs are well known to one of ordinary skill in the art.

The screws 40a, 40b are attached in the cooking plate. This feature allows for a stronger attachment, since the corrosion resistant material of the housing can provide a more firm attachment. The screws 40a, 40b could be attached in the cooking plate by means of nuts being imbedded in the cooking plate.

The heating body 11 is made resilient in the other direction, i.e. in the same plane as for the cooking plate. This feature is in this embodiment achieved by using screws 40a, 40b having a smaller diameter than the diameter of the screw hole.

In another embodiment, the resilient features is achieved by arranging at least one plate spring (not shown) at least between the heating body 11 and a cover side 30. For a resiliency in the same plane as for the cooking plate, further plate springs are arranged between the heating body 11 and one or more side walls of the housing 10.

By the resilient features, the heating body 11 is allowed to thermally expand in different directions without affecting the housing 10. This feature decreases the risk of damaging the surface structure of the outside of the housing 10 such that the heat transfer to food products undergoing cooking changes.

The cover side 30 is arranged with a space between the inner surface of the cover side 30 and the heating body 11. In this space, further components of the heating element 1 may be arranged.

For example, an isolating element (not shown) may be arranged in the space in order to further enhance that the heat from the heating body is transferred out from the housing through the cooking side instead of through the cover side.

Another example of a component which may be arranged in the space between the inner surface of the cover side 30 and the heating body 11 is a circulation element (not shown). The circulation element may be arranged in connection between the inlet 13 and the outlet 14 of the heat transfer loop 12, and comprise means for heating and re-circulating a heat carrier flowing through the heat transfer loop 12. The heat carrier could be hot oil, hot water or steam as previously disclosed. The means for heating the re-circulating fluid could be an electrical heater.

Another example is that actuating means (not shown) for an electrical resistance heater being the heat transfer loop 12 is arranged in the space. The inlet 13 and outlet 14 would in such an embodiment be arranged in connection with the actuating means.

Alternatively, the inlet 13 and outlet 14 are arranged in the cover side 30 to e.g. means for actuating or circulation outside the heating element 1. Other alternatives are that the inlet 13 and/or outlet 14 are arranged in another part of the housing 10, such as in any of the side walls.

A belt cooking apparatus 5 comprising a plurality of heating elements 1 in form of heating platens is illustrated in figure 5. The heating elements 1 could be adapted according to any of the previously disclosed embodiments. The belt cooking apparatus 5 comprises two belts 51, 52 arranged opposite to each other. Between the two belts 51, 52, a food product 50 may be transported by a cooperate movement of the belts 51, 52. The food products are typically flat food products. The food product 50 could be for example a hamburger, hot dog, pancake, fish filet, chicken filet, piece of bread, vegetable, etc.

When being transported, the food product 50 is lead past the plurality of heating elements 1 being arranged on the opposite sides of the belts 51, 52. The plurality of heating elements 1 provides, in a previously disclosed manner, heating through the belts 51, 52 to the food product 50. As the food product 50 passes heating elements 1, the heating elements 1 cook the food product 50.

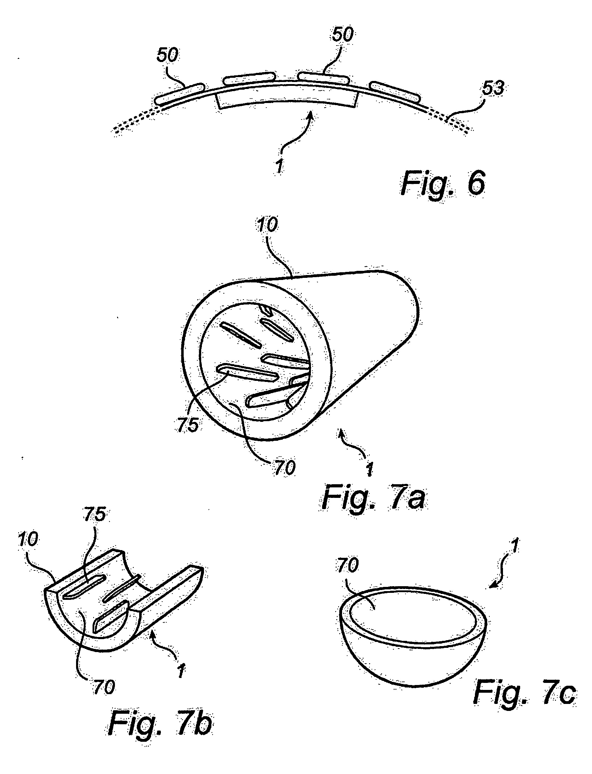

In the embodiment illustrated in figure 1, the housing 10 is plate shaped. However, other shapes of the housing 10 are feasible within the scope of the present invention. Figures 6 - 7c illustrate examples of such embodiments.

A heating element 1 having a curved formed housing 10 is illustrated in figure 6. The heating element 1 is arranged adjacent to a belt 53. The belt could be a part of a belt cooking apparatus.

An advantage with the embodiment illustrated in figure 6 is that the belt is strained against the heating element 1. This feature enables a high and even heat transfer to the food products 50 from the heating element 1 through the belt 53.

A heating element 1 having a tube shaped housing 10 is illustrated in figure 7a. The inside 70 of the housing 10 corresponds to the cooking side in above disclosed embodiments. A heating body (not shown) is arranged inside the tube walls. The heating body has the same features and advantages as in above disclosed embodiments.

The heating element 1 further comprises baffles 75.

The heating element 1 according to this embodiment is operated by rotating it and food products are led through the heating element 1 and being mixed by means of the baffles 75. At the same time, the food products are cooked by being exposed to heat provided by the heating body and transferred through the inside 75 of the heating element 1. Examples of food products which are suitable to cook in this type of heating element 1 are meatballs, minced meat, vegetables, etc.

A curved heating element 1 is illustrated in figure 7b. In this embodiment, the heating element 1 may be arranged in a swinging motion in order to move the food products to be cooked along the inside 70. The inside 70 corresponds to the cooking side in above disclosed embodiments. A heating body (not shown) is arranged inside the walls of the heating element 1. The heating body has the same features and advantages as in above disclosed embodiments. Baffles 75 are arranged on the inside 70 in order to move around the food products to be cooked such that they are cooked evenly.

In one embodiment, the tube formed heating element 1 in figure 7a is composed by a plurality of heating elements 1 formed as in figure 7b.

A hemisphere shaped heating element 1 is illustrated by figure 7c. The inside 70 of the heating element 1 corresponds to the cooking side in above disclosed embodiments. A heating body (not shown) is arranged inside the walls of the heating element 1. The heating body has the same features and advantages as in above disclosed embodiments. The food product to be cooked by the heating element 1 is arranged inside the heating element 1, such that they are cooked by heat provided by the heating body and transferred through the inside 70. The heating element 1 according to this embodiment could form a roasting table.

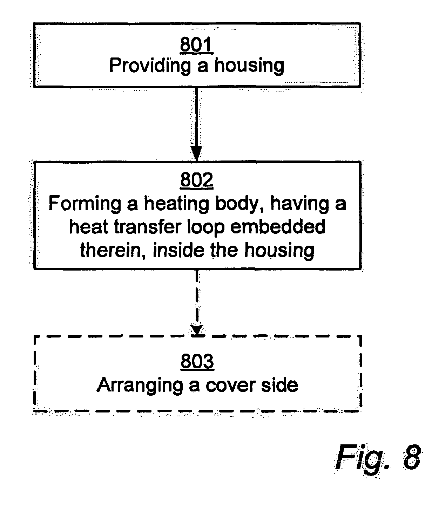

A method for producing the heating element 1 for a cooking apparatus 5 is illustrated in figure 8. The method comprises the subsequent steps of: step 801 of providing a housing 10 made of corrosion resistant steel, the housing 10 having cooking side and side surfaces extending from the cooking side; and step 802 of forming a heating body 11, having a heat transfer loop 12 embedded therein, inside the housing 10.

Preferably, the forming of the heating body 11 comprises casting the heating body 11. The heating body 11 is casted directly inside the housing 10.

The method may comprise a further step 803 of arranging a cover side 30 to the housing 10. The step 803 is performed after the step 802 of forming the heating body 11. The cover side 30 is arranged such that the housing 10, comprising the cover side 30, fully encloses the heating body 11. This feature together with its advantages is previously disclosed.

Preferred features, materials, and alternatives for the heating element 1 and its components also apply to the heating element 1 in this aspect of the present invention. However, for obvious reasons and as understood by one of ordinary skill in the art, the method is limited to embodiments of the heating element 1 where the heating body 11 is formed inside the housing 10.

In summary, the present invention relates to a heating element 1 for a cooking apparatus 5. The heating element 1 comprises a heating body 11 having a heat transfer loop 12 encased within the heating body 11; and a housing 10 made of corrosion resistant steel, the housing 10 having a cooking side and side surfaces extending from the cooking side. The heating body 11 is disposed inside the housing 10 for allowing the heat transfer from the heating body 11 to the housing 10. In another aspect, the present invention relates to a belt cooking apparatus 5 comprising a heating element 1 according to the above. In yet another aspect, the present invention relates to a method for producing a heating element 1 for a cooking apparatus 5. The method comprises the steps of: providing 801 a housing 10 made of corrosion resistant steel, the housing 10 having a cooking side and side surfaces extending from the cooking side; and forming 802 a heating body 11, having a heat transfer loop 12 embedded therein, inside the housing 10.

It will be appreciated that the present invention is not limited to the embodiments shown. Several modifications and variations are thus conceivable within the scope of the invention. For example, the method could comprise further steps, materials other than the above disclosed having the same characteristics could be used, the heating body 11 could have other forms than disclosed in the preferred embodiments, etc. The heating element 1 of the present invention is neither limited to be used in belt cooking apparatuses.

## Claims

1. Heating element (1) for a cooking apparatus, the heating element (1) comprising:
a heating body (11) having a heat transfer loop (12) encased within the heating body (11), **characterised in that** it comprises
a housing (10) made of corrosion resistant steel, the housing (10) having a cooking side and side surfaces extending from the cooking side,
wherein the heating body (11) is disposed within the housing (10) for allowing heat transfer from the heating body (11) to the housing (10).

2. Heating element (1) according to claim 1, wherein the heating body (11) is formed by casting and the heat transfer loop (12) is embedded inside the heating body (11) while casting the heating body (11).

3. Heating element (1) according to claim 1, wherein the heating body (11) is arranged against the cooking side of the housing (10).

4. Heating element (1) according to claim 3, wherein at least the cooking side of the housing is made of a heat resistant steel.

5. Heating element (1) according to any one of claims 1 - 4, wherein the heating body (11) is made of one or more materials chosen from the group comprising aluminum, zinc, tin, lead, heat conducting granulate and thermal grease.

6. Heating element (1) according to any one of claims 1 - 4, wherein the heat transfer loop (12) comprises an electrical resistance heater.

7. Heating element (1) according to claim 1 - 4, wherein the heat transfer loop (12) comprises a channel adopted to carry a hot fluid such as hot oil, hot water, or steam.

8. Heating element (1) according to any one of claims 1 - 7, wherein the heating body (11) is bolted inside the housing (10).

9. Heating element (1) according to claim 8, wherein the heating body (11) is resiliently bolted inside the housing (10).

10. Heating element (1) according to any of the claims 1 - 9, wherein the housing (10) further comprises a cover side (30) arranged adjacent to the side surfaces and opposite the cooking side such that the housing (10) fully encloses the heating body (11).

11. Heating element (1) according to any of the claims 1 - 10, wherein the cooking apparatus is a belt cooking apparatus (5), and wherein during operation of the belt cooking apparatus (5), the cooking side of the housing (10) is exposed to a belt (51, 52, 53) of the belt cooking apparatus (5).

12. Belt cooking apparatus (5) comprising a heating element (1) according to any one of claims 1 - 11.

13. Method for producing a heating element (1) for a cooking apparatus (5), comprising;
providing a housing (10) made of corrosion resistant steel, the housing (10) having a cooking side and side surfaces extending from the cooking side, and
forming a heating body (11), having a heat transfer loop (12) embedded therein, inside the housing (10).

14. Method according to claim 13, wherein the method further comprises the step of arranging a cover side (30) adjacent to the side surfaces and opposite the cooking side such that the housing (10) fully encloses the heating body (11).

15. Method according to any of the claims 13 - 14, wherein the forming of the heating body (10) comprises casting the heating body (10).

## Patentansprüche

1. Heizelement (1) für eine Kochvorrichtung, wobei das Heizelement (1) Folgendes umfasst:
einen Heizkörper (11) mit einer Wärmeübertragungsschleife (12), die in dem Heizkörper (11) eingeschlossen ist, **dadurch gekennzeichnet, dass** er Folgendes umfasst
ein Gehäuse (10) aus korrosionsbeständigem Stahl, wobei das Gehäuse (10) eine Kochseite und Seitenoberflächen aufweist, die sich von der Kochseite erstrecken,
wobei der Heizkörper (11) in dem Gehäuse (10) angeordnet ist, um die Wärmeübertragung von dem Heizkörper (11) auf das Gehäuse (10) zu ermöglichen.

2. Heizelement (1) nach Anspruch 1, wobei der Heizkörper (11) durch Gießen geformt ist und die Wärmeübertragungsschleife (12) in dem Heizkörper (11) eingebettet ist, während der Heizkörper (11) gegossen wird.

3. Heizelement (1) nach Anspruch 1, wobei der Heizkörper (11) gegen die Kochseite des Gehäuses (10) angeordnet ist.

4. Heizelement (1) nach Anspruch 3, wobei mindestens die Kochseite des Gehäuses aus einem wärmebeständigen Stahl gefertigt ist.

5. Heizelement (1) nach einem der Ansprüche 1 bis 4, wobei der Heizkörper (11) aus einem oder mehreren Materialien gefertigt ist, die ausgewählt sind aus der Gruppe, umfassend Aluminium, Zink, Zinn, Blei, wärmeleitendem Granulat und Wärmeleitpaste.

6. Heizelement (1) nach einem der Ansprüche 1 bis 4, wobei die Wärmeübertragungsschleife (12) eine elektrische Widerstandsheizung umfasst.

7. Heizelement (1) nach einem der Ansprüche 1 bis 4, wobei die Wärmeübertragungsschleife (12) einen Kanal umfasst, der zum Befördern eines heißen Fluids wie heißem Öl, heißem Wasser oder Dampf geeignet ist.

8. Heizelement (1) nach einem der Ansprüche 1 bis 7, wobei der Heizkörper (11) in dem Gehäuse (10) verschraubt ist.

9. Heizelement (1) nach Anspruch 8, wobei der Heizkörper (11) in dem Gehäuse (10) elastisch verschraubt ist.

10. Heizelement (1) nach einem der Ansprüche 1 bis 9, wobei das Gehäuse (10) ferner eine Abdeckseite (30) umfasst, die benachbart zu den Seitenoberflächen und gegenüber der Kochseite angeordnet ist, sodass das Gehäuse (10) den Heizkörper (11) vollständig umschließt.

11. Heizelement (1) nach einem der Ansprüche 1 bis 10, wobei die Kochvorrichtung eine Bandkochvorrichtung (5) ist und wobei während des Betriebs der Bandkochvorrichtung (5) die Kochseite des Gehäuses (10) einem Band (51, 52, 53) der Bandkochvorrichtung (5) ausgesetzt ist.

12. Bandkochvorrichtung (5), umfassend ein Heizelement (1) nach einem der Ansprüche 1 bis 11.

13. Verfahren zum Herstellen eines Heizelements (1) für eine Kochvorrichtung (5), umfassend:
Bereitstellen eines Gehäuses (10) aus korrosionsbeständigem Stahl, wobei das Gehäuse (10) eine Kochseite und Seitenoberflächen aufweist, die sich von der Kochseite erstrecken, und
Formen eines Heizkörpers (11) mit einer darin eingebetteten Wärmeübertragungsschleife (12) in dem Gehäuse (10).

14. Verfahren nach Anspruch 13, wobei das Verfahren ferner den Schritt des Anordnens einer Abdeckseite (30) benachbart zu den Seitenoberflächen und gegenüber der Kochseite umfasst, dass das Gehäuse (10) den Heizkörper (11) vollständig umschließt.

15. Verfahren nach einem der Ansprüche 13 bis 14, wobei das Formen des Heizkörpers (11) das Gießen des Heizkörpers (11) umfasst.

## Revendications

1. Elément de chauffage (1) pour appareil de cuisson, cet élément de chauffage (1) comprenant :
un corps chauffant (11) ayant un circuit de transfert thermique (12) intégré dans le corps chauffant (11), **caractérisé en ce qu'**il comprend
un boîtier (10) fait d'acier résistant à la corrosion, le boîtier (10) ayant un côté cuisson et des surfaces latérales s'étendant depuis le côté cuisson,
le corps chauffant (11) étant disposé dans le boîtier (10) pour permettre le transfert thermique du corps chauffant (11) au boîtier (10).

2. Elément de chauffage (1) selon la revendication 1, dans lequel le corps chauffant (11) est formé par coulage et le circuit de transfert thermique (12) est encastré dans le corps chauffant (11) en coulant le corps chauffant (11).

3. Elément de chauffage (1) selon la revendication 1, dans lequel le corps chauffant (11) est disposé contre le côté cuisson du boîtier (10).

4. Elément de chauffage (1) selon la revendication 3, dans lequel au moins le côté cuisson du boîtier et fait d'acier résistant à la chaleur.

5. Elément de chauffage (1) selon l'une quelconque des revendications 1 à 4, dans lequel le corps chauffant (11) est fait d'un ou plusieurs matériaux choisis dans le groupe comprenant l'aluminium, le zinc, l'étain, le plomb, des granulés conducteurs thermiques et de la graisse thermique.

6. Elément de chauffage (1) selon l'une quelconque des revendications 1 à 4, dans lequel le circuit de transfert thermique (12) comprend un système de chauffage à résistance électrique.

7. Elément de chauffage (1) selon l'une quelconque des revendications 1 à 4, dans lequel le circuit de transfert thermique (12) comprend un canal adopté pour charrier un fluide chaud comme de l'huile chaude, de l'eau chaude ou de la vapeur.

8. Elément de chauffage (1) selon l'une quelconque des revendications 1 à 7, dans lequel le corps chauffant (11) est boulonné dans le boîtier (10).

9. Elément de chauffage (1) selon la revendication 8, dans lequel le corps chauffant (11) est boulonné élastiquement dans le boîtier (10).

10. Elément de chauffage (1) selon l'une quelconque des revendications 1 à 9, dans lequel le boîtier (10) comprend en outre un côté recouvrement (30) disposé adjacent aux surfaces latérales et opposé au côté cuisson, de sorte que le boîtier (10) renferme entièrement le corps chauffant (11).

11. Elément de chauffage (1) selon l'une quelconque des revendications 1 à 10, dans lequel l'appareil de cuisson est un appareil de cuisson à bande (5) et, pendant le fonctionnement de l'appareil de cuisson à bande (5), le côté cuisson du boîtier (10) est exposé à une bande (51, 52, 53) de l'appareil de cuisson à bande (5).

12. Appareil de cuisson à bande (5) comportant un élément de chauffage (1) selon l'une quelconque des revendications 1 à 11.

13. Procédé de production d'un élément de chauffage (1) pour appareil de cuisson (5), comprenant :
la mise à disposition d'un boîtier (10) fait d'acier résistant à la corrosion, le boîtier (10) ayant un côté cuisson et des surfaces latérales s'étendant depuis le côté cuisson,
la réalisation d'un corps chauffant (11), doté d'un circuit de transfert thermique (12) encastré dedans, dans le boîtier (10).

14. Procédé selon la revendication 13, ce procédé comprenant en outre l'étape de disposition d'un côté recouvrement (30) adjacent aux surfaces latérales et opposé au côté cuisson de manière à ce que le boîtier (10) renferme complètement le corps chauffant (11).

15. Procédé selon l'une quelconque des revendications 13 et 14, dans lequel la réalisation du corps chauffant (11) comprend le coulage du corps chauffant (11).
